# EUROPÄISCHE PATENTSCHRIFT

(11) **EP 0 758 461 B1**
(45) Veröffentlichungstag und Bekanntmachung des Hinweises auf die Patenterteilung: **18.02.1998**
(21) Anmeldenummer: 95917979.7
(22) Anmeldetag: 28.04.1995
(51) Int. Cl.: G02C 5/22

(54) **FEDERSCHARNIER**
SPRING HINGE
CHARNIERE A RESSORT

(30) Priorität: 30.04.1994 DE 4415307
(43) Veröffentlichungstag der Anmeldung: 19.02.1997
(73) Patentinhaber: OBE Ohnmacht & Baumgärtner GmbH & Co. KG, 75228 Ispringen (DE)
(72) Erfinder: LEHNERT, Otto, D-74889 Sinsheim (DE)
(74) Vertreter: Gleiss, Alf-Olav, Dr.jur. Dipl.-Ing.
(86) Internationale Anmeldenummer: EP9501621
(87) Internationale Veröffentlichungsnummer: WO9530171

(56) Entgegenhaltungen:
- EP-A- 0 395 939
- EP-A- 0 632 306
- DE-U- 9 301 985
- DE-U- 9 306 387
- GB-A- 2 268 282

## Beschreibung

Die Erfindung betrifft ein Federscharnier für Brillen mit einem ein Federelement und zumindest Teile eines Scharnierelements aufnehmenden Gehäuse.

Federscharniere der hier angesprochenen Art sind beispielsweise aus EP 0395 939 A2 bekannt. Sie weisen ein Gehäuse auf, in das ein Federelement einbringbar ist, welches ein Verschwenken eines mit diesem Federscharnier verbundenen Brillenbügels über die normale Tragestellung hinaus ermöglicht und den Brillenbügel mit einer Vorspannkraft beaufschlagt, durch die der Bügel gegen den Kopf des Brillenträgers angedrückt wird. Es hat sich in einigen Fällen als nachteilig herausgestellt, daß die Herstellung des Federscharniers recht aufwendig ist. Es bedarf nämlich zur Einbringung der für das Federelement erforderlichen Gehäuse-Innenräume eines Zerspanungsvorgangs, was insbesondere angesichts der kleinen Abmessungen des Gehäuses ein präzises Arbeiten erfordert und deshalb aufwendig ist. Es hat sich auch gezeigt, daß die Führungseigenschaften eines derartigen Gehäuses nicht immer ausreichend sind. Es kann vorkommen, daß das mit dem Bügel verbundene Scharnierelement nicht sicher gehalten wird und daher wackelt. Es bedarf eines relativ hohen konstruktiven Aufwandes, um diesen Nachteil zu vermeiden.

Darüber hinaus treten bei Federscharnieren mit Schnappeffekt, bei denen ein am Mittelteilscharnier befindlicher Nocken an einer Stirnfläche des Gehäuses abrollt, Probleme auf. Insbesondere wird die Materialeigenschaft dieser Lauffläche beim Auflöten des Gehäuses auf den Bügel durch die große Hitzeeinwirkung beeinträchtigt. Dies führt dazu, daß die Lauffläche dem Druck des Nockens nach längerem Gebrauch nicht mehr Stand hält und einläuft. Ein sauberes Abrollen kann dann nicht mehr sichergestellt werden.

Es ist daher Aufgabe der Erfindung, ein Federscharnier zu schaffen, das einerseits kostengünstig herstellbar ist und das sich andererseits durch gute Führungseigenschaften auszeichnet. Darüber hinaus soll die Lauffläche auch bei längerem Gebrauch ihre guten Abrolleigenschaften nicht verlieren.

Diese Aufgabe wird mittels eines Federscharniers gelöst, das die in Anspruch 1 aufgeführten Merkmale aufweist. Dadurch, daß das Gehäuse der Aufnahme eines Verschlußteils dient, welches eine Führung für das Scharnierelement darstellt und eine vom Gehäuse unabhängige Lauffläche bietet, ergibt sich einerseits ein einfacher Aufbau des Gehäuses, andererseits eine sichere Führung für das Scharnierelement und eine Lauffläche, deren Material unabhängig vom Gehäusematerial ausgewählt und auf die speziellen Anforderungen abgestimmt werden kann.

Die Aufgabe wird darüber hinaus durch ein Herstellungsverfahren gelöst, daß die in Anspruch 12 aufgeführten Merkmale aufweist. Dadurch, daß das Gehäuse das Verschlußteil und/oder das Scharnierelement aus einem einfachen sehr preisgünstigen Metall ausgestanzt und/oder umgeformt werden, ist die Herstellung sehr einfach und kostengünstig. Insbesondere kann auf teure Profile und aufwendige zerspanende Bearbeitungsschritte, wie Fräsen oder Bohren vollständig verzichtet werden.

Ein weiterer Vorteil ergibt sich, wenn das Gehäuse aus einem Material gleichmäßiger Dicke gefertigt wird. Dann nämlich sind die Wandstärken des Gehäuses im wesentlichen gleich, wodurch beispielsweise beim induktiven Erwärmen des Gehäuses ein Ausgleichen dünnerer Bereiche vermieden wird.

Besonders bevorzugt wird ein Ausführungsbeispiel des Federscharniers, bei dem das Verschlußteil gemeinsam mit einem in das Gehäuse einbringbaren Federelement und dem Scharnierelement als vormontierbare Montageeinheit ausgebildet ist, die einfach in ein auf einem Brillenbügel aufbringbares Gehäuse einbringbar ist. Die Endmontage eines derartig ausgebildeten Federscharniers ist also einfach und damit preiswert realisierbar.

Weitere Ausgestaltungen des Federscharniers ergeben sich aus den weiteren Unteransprüchen.

Die Erfindung wird im folgenden anhand der Zeichnung näher erläutert. Es zeigen:
- Figur 1: einen Längsschnitt durch ein erstes Ausführungsbeispiel eines Federscharniers;
- Figur 2: eine Draufsicht auf das in Figur 1 dargestellte Federscharnier.
- Figur 3: einen Längsschnitt durch ein in das Gehäuse gemäß Figur 1 einsetzbares Verschlußteil;
- Figur 4: eine Vorderansicht des Verschlußteils;
- Figur 5: eine Draufsicht des Verschlußteils;
- Figur 6: einen Längsschnitt durch ein zweites Ausführungsbeispiel eines Federscharniers;
- Figur 7: eine Unteransicht des in Figur 6 gezeigten Federscharniers;
- Figur 8: eine perspektivische Ansicht eines Verschlußteils;
- Figur 9: einen Längsschnitt durch ein weiteres Ausführungsbeispiel eines Federscharniers;
- Figur 10: eine Unteransicht des in Figur 9 gezeigten Federscharniers;
- Figur 11: einen Längsschnitt durch ein bei dem Federscharnier gemäß Figur 9 verwendetes Verschlußteil;
- Figur 12: eine Unteransicht des in Figur 11 dargestellten Verschlußteils;
- Figur 13: einen Längsschnitt durch ein weiteres Ausführungsbeispiel eines Federscharniers;
- Figur 14: einen Querschnitt entlang der in Figur 13 eingezeichneten Linie A-A, und
- Figur 15: eine perspektivische Schemaansicht eines im Zusammenhang mit dem Federscharnier gemäß Figur 13 verwendeten Verschlußteils.

Federscharniere der hier angesprochenen Art werden zur Befestigung von Brillenbügeln an einem Mittelteil einer Brille verwendet, wobei das Federscharnier in der Regel am Bügel angebracht ist und ein Scharnierelement aufweist, welches mit einem Scharnier am Mittelteil der Brille zusammenwirkt und den Bügel gelenkig mit diesem verbindet. Der Bügel kann aus seiner Ruhestellung in eine Tragestellung verlagert und über diese hinaus aufgeklappt werden, wobei durch ein Federelement des Federscharniers eine Rückstellkraft aufgebracht wird.

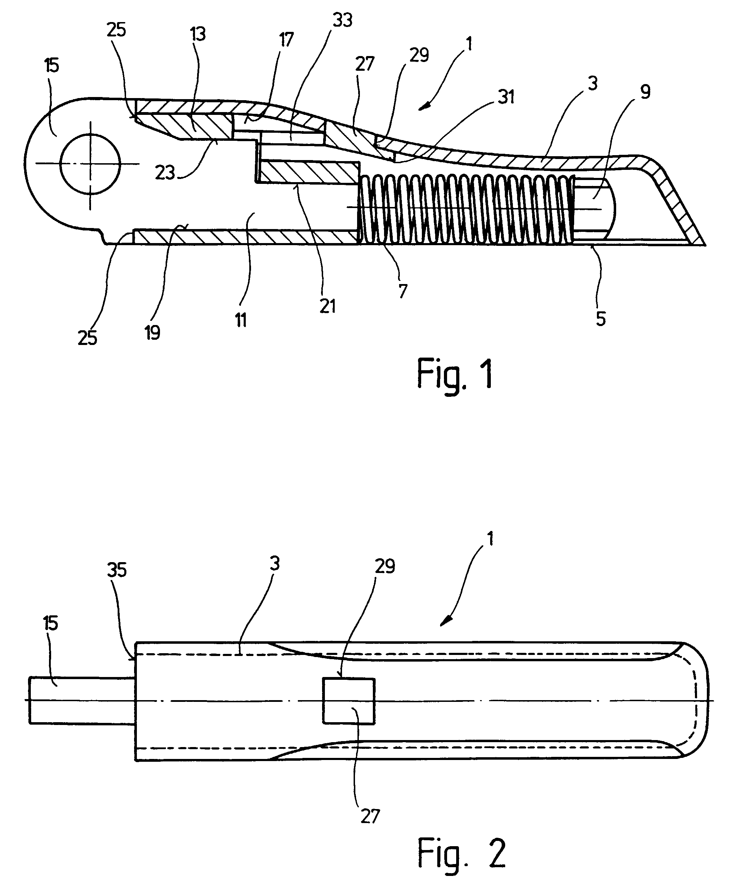

Das in Figur 1 dargestellte erste Ausführungsbeispiel eines Federscharniers 1 ist im Längsschnitt dargestellt und weist ein Gehäuse 3 auf, das durch einen Prägevorgang aus verformbarem Material, beispielsweise aus Metall, in einem Tiefzieh- beziehungsweise Prägevorgang hergestellt wurde. Eine genauere Beschreibung des Verfahrens erfolgt in Zusammenhang mit Figur 16. Das Gehäuse 3 ist auf seiner Unterseite 5 offen. In das Gehäuse 3 ist ein als Schraubenfeder ausgebildetes Federelement 7 eingebracht, das an einem langgestreckten Fortsatz 9 eines Scharnierelements 11 angebracht ist. Hier ist der Fortsatz als langgestreckter Stift ausgebildet, der durch die Schraubenfeder hindurch ragt und dessen Ende beispielsweise durch einen Quetschvorgang so verbreitert ist, daß ein Widerlager für die Schraubenfeder gebildet wird. Das gegenüberliegende Ende der Schraubenfeder beziehungsweise des Federelements 7 stützt sich an einem in das Gehäuse 3 eingebrachten Verschlußteil 13 ab, durch das das Scharnierelement 11 hindurchgeführt ist. Das Verschlußteil 13 wird gänzlich von dem Gehäuse 3 aufgenommen, während das Scharnierelement 11 ein aus der Stirnseite des Gehäuses 3 herausragendes Scharnierauge 15 aufweist, das mit einem am Mittelteil einer Brille vorgesehenen Mittelteil-Scharnier zusammenwirkt. Das Federelement 7 und das Verschlußteil 13 sind so dimensioniert, daß keines der Teile über die Unterseite 15 des Gehäuses 3 hinausragt, sondern daß vielmehr eine glatte Fläche gebildet wird, mit der das Gehäuse 3 auf der Oberfläche eines Bügels aufliegt und mit dieser fest verbunden, vorzugsweise verlötet wird.

Das Scharnierauge 15 ist einstückig mit dem übrigen Scharnierelement 11 ausgebildet. Auch der Fortsatz 9 ist Teil desselben, so daß die für die Herstellung des Federscharniers 1 erforderlichen Teile auf ein Minimum reduziert werden. Nachdem das als Schraubenfeder ausgebildete Federelement 7 auf den Fortsatz 9 aufgeschoben und dessen Ende so verbreitert wurde, daß die Feder nicht mehr ohne weiteres entfernbar ist, bilden das Federelement 7 und das Scharnierelement 11 eine Einheit.

Da das Verschlußteil 13 mit der Unterseite 5 des Gehäuses glatt abschließt, liegt auch die Unterseite des Verschlußteils 13 flächig auf der Oberfläche des Bügels auf, wenn das Gehäuse 3 dort befestigt ist. Andererseits stützt sich das Verschlußteil 13 nahe der Stirnseite des Gehäuses 3 an dessen Innenseite 17 ab. Im montierten Zustand des Federscharniers 1 ergibt sich also eine optimale Halterung des Verschlußteils 13.

Das Verschlußteil weist eine glatte Innenfläche 19 auf, an der das Scharnierelement 11 flächig anliegt. Diese Innenfläche 19 dient als erste Führungsfläche für das innerhalb des Gehäuses 3 gegen die Kraft des Federelements 7 verschieblich gelagerte Scharnierelement 11. Eine zweite Führungsfläche 21 wird dadurch gebildet, daß das Verschlußteil 13 das Scharnierelement 11 im Inneren des Gehäuses 3 zumindest bereichsweise umschließt und damit führt. Eine dritte Führungsfläche 23 wird dadurch gebildet, daß das Scharnierelement 11 an einer weiteren Innenfläche des Verschlußteils 13 anliegt.

Das Scharnierauge 15 ist so dimensioniert, daß es mit einer Anschlagschulter 25 an der Stirnseite des Gehäuses 3 anliegt. Vorzugsweise ist das Verschlußteil 13 so groß ausgebildet, daß es ebenfalls an der Anschlagfläche 25 anliegt, wenn das Scharnierelement 11 aufgrund des unter einer Vorspannung stehenden Federelements 7 gegen die Stirnseite des Gehäuses 3 gezogen wird.

Da das Scharnierelement 11 durch das Verschlußteil 13 hindurchgesteckt ist und von dem Federelement 7 mit einer Vorspannungskraft beaufschlagt wird, während das Federelement 7 durch den verbreiterten Endbereich des Fortsatzes 9 an dem Scharnierelement 11 gehalten wird, ergibt sich eine Montageeinheit, die sich aus dem Scharnierelement 11, dem Federelement 7 und dem Verschlußteil 13 zusammensetzt.

Die Montageeinheit wird nach der Befestigung, beispielsweise durch Löten oder Schweißen, des Gehäuses 3 auf einem Brillenbügel, der in Figur 1 nicht dargestellt ist, eingeschoben. Das Verschlußteil 13 weist eine federnd am Grundkörper des Verschlußteiles angelenkte Verriegelungsnase 27 auf, die bei dem hier dargestellten Ausführungsbeispiel in eine Ausnehmung 29 eingreift, die in die Wandung des Gehäuses 3 eingebracht und in dessen Oberseite angeordnet ist. Durch ein geeignetes Widerlager 31 wird verhindert, daß die Verriegelungsnase zu weit aus dem Gehäuse 3 herausgedrückt wird und letztlich die Ausnehmung 29 vollflächig ausfüllt, ohne die Oberfläche des Gehäuses 3 zu überragen.

Grundsätzlich ist es denkbar, daß die Ausnehmung 29 lediglich eine Vertiefung in der Wandung des Gehäuses 3 bildet und daß die Verriegelungsnase 27 in dieser einrastet und damit dem Verriegelungsteil 13 im Inneren des Gehäuses 3 Halt gibt. Bei dem hier dargestellten Ausführungsbeispiel durchbricht die Ausnehmung 29 die Wandung des Gehäuses 3 vollständig, so daß die Verriegelungsnase 27 von außen erreichbar ist und in ihre Entriegelungsstellung gedrängt werden kann. Die Verriegelungsnase 27 ist über einen Federarm 33 mit dem Grundkörper des Verschlußteils 13 verbunden.

Aus der Draufsicht gemäß Figur 2 ist erkennbar, daß das Scharnierauge 15 die Stirnseite 35 des Gehäuses 3 überragt und schmaler als dieses ausgebildet ist. Die Darstellung läßt auch die Ausnehmung 29 erkennen, die hier lediglich beispielhaft viereckig ausgebildet ist und die Verriegelungsnase 27 aufnimmt. Die Dimensionen der Ausnehmung und der Verriegelungsnase 27 sind so aufeinander abgestimmt, daß das Innere des Gehäuses 3 durch die Verriegelungsnase 27 gegen das Eindringen von Schmutz geschützt ist. Entsprechend ist auch das Verschlußteil 13 so dimensioniert, daß die Stirnseite 35 des Gehäuses 3 gegen das Eindringen von Schmutz geschützt ist.

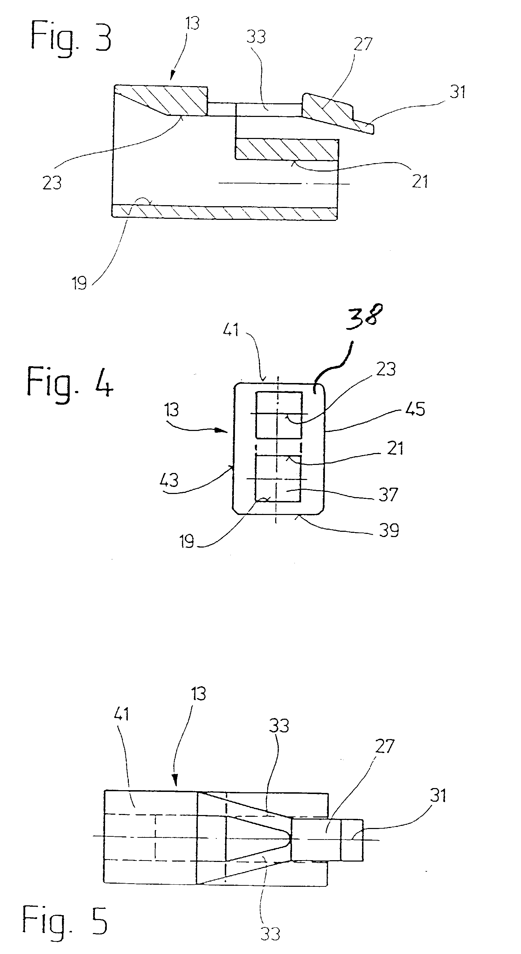

Figur 3 zeigt das Verschlußteil 13 in demontiertem Zustand. Deutlich ist die Innenfläche 19 zu erkennen, die als erste Führungsfläche für das Scharnierelement 11 dient. Darüber hinaus sind die zweite Führungsfläche 21 und die dritte Führungsfläche 23 erkennbar, die mit der ersten Führungsfläche so zusammenwirken, daß das Scharnierelement 11 praktisch spielfrei im Inneren des Verschlußteils 13 geführt ist. Dadurch ergibt sich eine optimale Führung des Scharnierelements 11 im Inneren des Gehäuses 3.

Figur 3 gibt auch den anhand von Figur 1 erläuterten Federarm 33, die Verriegelungsnase 27 und das Widerlager 31 wieder.

Die Innenabmessungen des Verschlußteils 13 sind nach dem oben Gesagten so auf die Abmessungen des Scharnierelements 11 abgestimmt, daß dieses praktisch spielfrei geführt ist.

Die in Figur 4 dargestellte Vorderansicht des Verschlußteils 13 läßt erkennen, daß zwischen der zweiten Führungsfläche 21 und der Innenfläche 19 ein praktisch quadratischer Durchbruch 37 gegeben ist, der von dem -vorzugsweise in diesem Bereich ebenfalls quadratisch ausgebildeten- Scharnierelement 11 durchdrungen wird. Figur 4 läßt auch die dritte Führungsfläche 23 erkennen. Darüber hinaus zeigt Figur 4 eine Stirnfläche 38, die auch als Lauffläche bezeichnet wird. Deren genaue Funktion wird später noch beschrieben.

Die Ausgestaltung des Verschlußteils 13 wird an die Innenform des Gehäuses 3 angepaßt, so daß -im montierten Zustand des Federscharniers 1- das Verschlußteil 13 mit seiner Unterseite 39 auf der Oberfläche des dargestellten Brillenbügels aufliegt, dabei mit seiner Oberseite 41 an der Innenseite 17 des Gehäuses 3 anliegt, während die Seitenflächen 43 und 45 vorzugsweise an den Seitenwänden des Gehäuses 3 anliegen. Das Verschlußteil 13 wird also im montierten Zustand des Federscharniers 1 von dem Gehäuse 3 praktisch spielfrei festgehalten.

Aus Figur 4 ist erkennbar, daß also das Verschlußteil 13 das Scharnierelement 11 von allen Seiten umschließt, so daß die oben angesprochene Montageeinheit ausgebildet wird.

Die in Figur 5 gezeigte Draufsicht auf die Oberseite 41 des Verschlußteils 13 läßt erkennen, daß die Breite der Verriegelungsnase 27 geringer sein kann als die des Verschlußteils 13. Der die Verriegelungsnase 27 haltende Federarm 33 kann als durchgehende Materialbrücke ausgebildet sein. Es reicht jedoch, wenn wenigstens ein schmaler Federarm vorgesehen ist, oder wie bei dem hier dargestellten Ausführungsbeispiel, zwei im wesentlichen V-förmige Federarme 33 die Verriegelungsnase 27 elastisch federnd mit dem Grundkörper des Verschlußteils 13 verbinden.

Die Verriegelungsnase 27, die gemäß Figur 1 beziehungsweise 3 eine als Anlaufschräge ausgebildete Oberfläche aufweist, bildet quasi einen Schnappverschluß, mit dem die Montageeinheit aus Federelement 7, Scharnierelement 11 und Verschlußteil 13 sicher im Inneren des Gehäuses 3 gehalten wird. Die Verriegelungsnase 27 wird aufgrund der Federwirkung der Federarme 33 in der Ausnehmung 29 gehalten.

Das Scharnierelement 11 ebenso wie das Verschlußteil 13 werden aus Metall, insbesondere nikkelfreiem Metall, vorzugsweise Titan hergestellt, damit einerseits allergische Reaktionen des Brillenträgers vermieden und andererseits Verschleißerscheinungen auf ein Minimum reduziert werden.

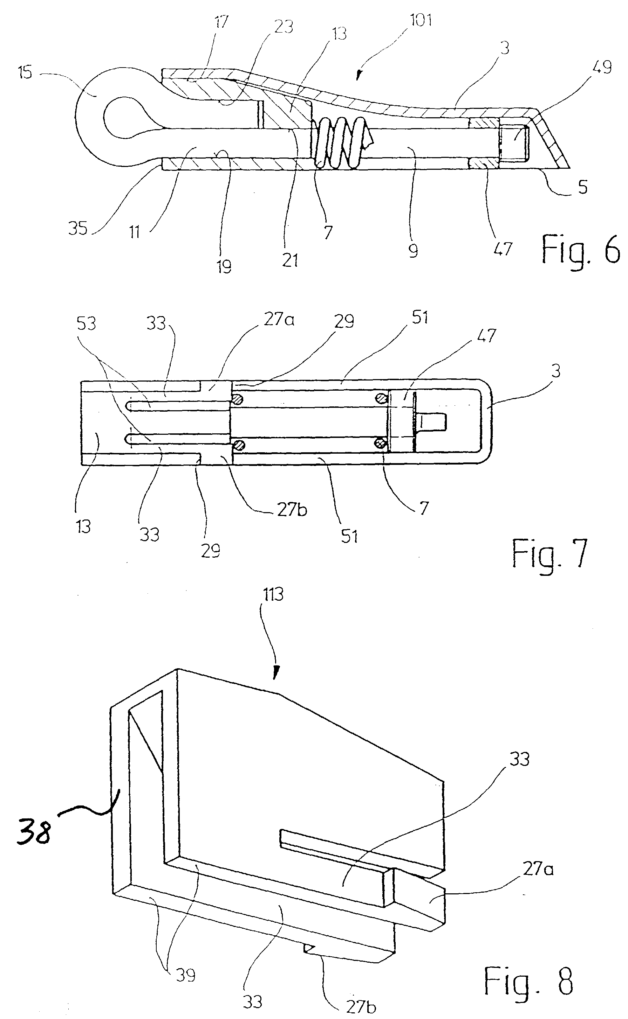

Figur 6 zeigt ein weiteres Ausführungsbeispiel eines Federscharniers 101 im Längsschnitt. Es ist auch hier ein Gehäuse 3 erkennbar, das ein Verschlußteil 13 aufnimmt, das von einem Scharnierelement 11 durchdrungen wird und das mit einem Fortsatz 9 ein Federelement 7 durchdringt, das auch hier als Schraubenfeder ausgebildet ist. Die Schraubenfeder stützt sich einerseits an dem Verschlußteil 13 andererseits an einem Anlagering 47 ab, der auf den Fortsatz 9 geschoben ist und durch eine beispielsweise durch Quetschung erzeugte Verbreiterung des Fortsatzes 9 gehalten wird. Das Federelement 7 ist unter Vorspannung auf den Fortsatz aufgebracht, so daß das Scharnierelement 11 so in das Verschlußteil 13 hereingezogen wird, daß das Scharnierauge 15 gegen die Stirnseite 35 des Gehäuses 3 beziehungsweise des Verschlußteils 13 gezogen wird.

Das Gehäuse 3 ist so ausgebildet, daß dessen Unterseite 5 weder von dem Federelement 7 noch von dem Verschlußteil 13 überragt wird. Wird also das Gehäuse 3 auf einen Brillenbügel aufgebracht, beispielsweise aufgelötet, liegt das Verschlußteil 13 mit seiner Unterseite bündig auf der Oberseite des Bügels an. Andererseits liegt das Verschlußteil 13 mit seiner Oberseite an der Innenseite 17 des Gehäuses 3 an, so daß im montierten Zustand des Federscharniers 101 das Verschlußteil 13 sicher im Inneren des Gehäuses 3 gehalten wird und eine Führung für das Scharnierelement 11 bildet. Dieses liegt einerseits an der Innenfläche 19 des Verschlußteils 13 an, die eine erste Führungsfläche bildet, andererseits an einer zweiten Führungsfläche 21, die nahe dem Anlagebereich des Federelements 7 entspringt und sich in Richtung zur Stirnseite 35 erstreckt. Nahe der Stirnseite findet sich eine dritte Führungsfläche 23, die, wie die erste Führungsfläche 21, der Innenfläche 19 gegenüberliegend angeordnet ist. Der Abstand der dritten Führungsfläche 23 ist größer als der der ersten Führungsfläche 21, da das Scharnierelement 11 in diesem Bereich höher ist.

Vorzugsweise ist das Scharnierelement 11 als Biegeteil hergestellt, nämlich aus einem den Fortsatz 9 bildenden langgestreckten Drahtteil, der im Bereich des Scharnierauges eine Öse bildet und in das Innere des Verschlußteils 13 zurückgeführt ist, um an der dritten Führungsfläche 23 anzuliegen. Das hier dargestellte Scharnierelement 11 ist besonders preiswert realisierbar. Eine weitere Herstellungsweise des Scharnierelements 11 wird mit Bezug auf Figur 17 erläutert.

Aus der Unteransicht gemäß Figur 7 ist erkennbar, daß der Anlagering 47 an den Innenflächen des Gehäuses 3 eines Federscharniers 101 anliegt und damit sicher geführt ist. Die Seitenwände des Verschlußteils 13 liegen ihrerseits an den inneren Flanken des Gehäuses 3 an, so daß auch hier eine sichere Führung des Verschlußteils 13 im Gehäuse 3 gegeben ist.

Das Verschlußteil 13 weist hier zwei Verriegelungsnasen 27a und 27b auf, die elastisch federnd an Federarmen 33 angebracht und mit dem Grundkörper des Verschlußteils 13 verbunden sind. Die Verriegelungsnasen 27a und 27b greifen in Ausnehmungen 29 des Gehäuses 3 an, die hier in dessen Seitenwände eingebracht sind. Grundsätzlich reichen auch hier Vertiefungen aus, in die die Verriegelungsnasen 27a und 27b eingreifen. Bei dem hier dargestellten Ausführungsbeispiel durchbrechen die Ausnehmungen 29 die Seitenwände 21. Die Außenflächen der Verriegelungsnasen 27a und 27b schließen flächig mit der Außenseite des Gehäuses 3 ab, so daß die optischen Eigenschaften des Federscharniers 101 in keiner Weise beeinträchtigt werden und die Verriegelungsnasen für eine mögliche Demontage des Verschlußteils 13 zugänglich bleiben. Die Verriegelungsnasen 27a und 27b greifen als Schnappverschlüsse in die Ausnehmungen 29 ein. Zur Unterstützung der Verriegelungskräfte der Federarme 33 wirkt das Federelement 7 auch auf die Innenseiten der Verriegelungsnasen 27a und 27b, so daß diese nach außen in die Ausnehmungen 29 gedrängt werden. Bei einer Überdehnung des Brillenbügels wird das Scharnierelement 11, das in Längsrichtung des Gehäuses 3 gegen die Kraft des Federelements verschieblich gelagert ist, aus dem Inneren des Gehäuses 3 herausgezogen und das Federelement 7 komprimiert. Dadurch erhöhen sich die in Richtung der Verriegelungsstellung der Verriegelungsnasen 27a und 27b wirkenden Federkräfte, so daß bei einer Belastung des Federscharniers 101 die Verankerung des Verschlußteils 13 im Inneren des Gehäuses 3 sicher gewährleistet ist.

Bei dem Ausführungsbeispiel gemäß Figur 7 ist die Unterseite des Verschlußteils 13 praktisch geschlossen. Es sind lediglich zwei Schlitze 53 vorgesehen, durch die die Federarme 33 gebildet werden, die die Verriegelungsnasen 27 mit dem übrigen Verschlußteil 13 verbinden.

In Figur 8 ist eine leichte Abwandlung des Verschlußteils 113 dargestellt. Es zeichnet sich dadurch aus, daß die Unterseite offen ist. Hier wird das in Figur 8 nicht dargestellte Scharnierelement 11 einerseits durch die aus Figur 6 ersichtliche zweite Führungsfläche 21 und die dritte Führungsfläche 23 und andererseits durch die Oberfläche eines Brillenbügels geführt, auf den das Federelement 111 mit einem Verschlußteil 113 aufgebracht wird.

Die perspektivische Unteransicht des Verschlußteils 113 läßt besonders gut die Ausgestaltung der Verriegelungsnasen 27a und 27b erkennen, deren Außenfläche etwa keilförmig ausgebildet ist, so daß der angesprochene Schnappverschluß entsteht, während die Verriegelungsnasen von den Federarmen 33 nach außen gedrängt werden.

Die Unterseite 39 des Verschlußteils 113 ist eben ausgebildet, so daß diese flächig auf der Oberfläche eines Brillenbügels aufliegt und eine optimale Führung des Scharnierelements 11 bilden kann.

Die anhand der Figuren 1 und 6 erläuterten Federscharniere stimmen nach allem also insofern überein, als nach Aufbringung des Gehäuses 3 auf die Oberfläche eines Brillenbügels die eingebrachte Montageeinheit aus Scharnierelement, Federelement und Verschlußteil jederzeit wieder demontierbar ist, weil die Verriegelungsnasen der Verschlußteile von außen auch im montierten Zustand zugänglich bleiben.

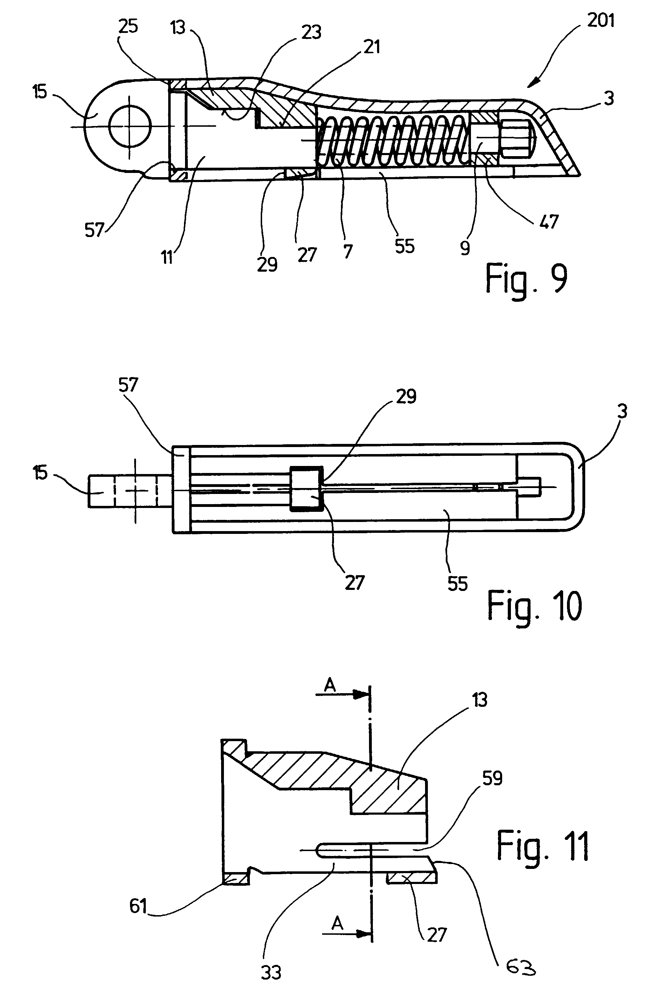

Figur 9 zeigt ein weiteres Ausführungsbeispiel eines Federscharniers 201, das wiederum ein Gehäuse 3, ein in das Gehäuse eingebrachtes Federelement 7 sowie ein ebenfalls im Inneren des Gehäuses 3 angeordnetes Scharnierelement 11 umfaßt, das einerseits einen Fortsatz 9 und andererseits ein einstückig mit diesem verbundenes Scharnierauge 15 umfaßt. Das Scharnierelement verläuft auch hier im Inneren eines Verschlußteils 13, welches das Scharnierelement 11 zumindest U-förmig umgreift.

Das Gehäuse 3 ist, wie aus Figur 10 ersichtlich, anders als die oben beschriebenen Gehäuse, mit einem Boden 55 versehen, der die in das Innere des Gehäuses eingebrachte Montageeinheit aus Federelement 7, Scharnierelement 11 und Verschlußteil 13 umschließt.

Das Verschlußteil 13 ist auch hier mit einer Verriegelungsnase 27 versehen, die in eine Ausnehmung 29 im Gehäuse 3 eingreift. Hier ist allerdings die Ausnehmung 29 in den Boden 55 eingebracht, so daß die Verriegelungsnase 27 nach dem Aufbringen des Federscharniers 201 auf einen Brillenbügel nicht mehr zugänglich ist. Das Innere des Gehäuses 3 ist damit besser gegen Staub und sonstige Verschmutzungen, die auch bei einem Lötvorgang anfallen können, geschützt.

Das Federelement 7 ist hier wiederum durch einen Anlagering 47 auf dem Fortsatz 9 gesichert, der durch eine Endverformung des Fortsatzes 9 gegen Abrutschen gesichert ist.

Das Scharnierelement 11 liegt mit seiner Unterseite flächig auf der Innenseite des Bodens 55 auf, der damit eine erste Führungsfläche bildet. Eine zweite Führungsfläche 21 ist nahe dem Federelement 27 ausgebildet, eine dritte Führungsfläche 23 in der Nähe der Stirnseite des Gehäuses 3. Damit ist das Scharnierelement 11, wie bei den übrigen Ausführungsbeispielen, durch das Verschlußteil 13 sicher geführt, dessen Inneres so auf die Dimensionen des Scharnierelements 11 abgestimmt ist, daß auch eine optimale seitliche Führung gewährleistet ist.

Zwischen die Stirnseite des Gehäuses 3 und das Scharnierauge 15, das wiederum eine Anschlagfläche 25 ausbildet, kann hier eine Verschlußplatte 57 vorgesehen sein, die das Eindringen von Verschmutzungen an der Stirnseite des Gehäuses verhindert.

Aus der Unteransicht gemäß Figur 10 ist ersichtlich, daß das Scharnierelement 11 schmaler ist als das Gehäuse 3. Deutlich erkennbar ist auch die die Wandung des Gehäuses 3 vollkommen durchdringende Ausnehmung 29, die die Verriegelungsnase 27 rundum umschließt.

Figur 11 zeigt das Verschlußteil 13 im Längsschnitt. Deutlich ist hier der Federarm 33 erkennbar, über den die Verriegelungsnase 27 mit dem Grundkörper des Verschlußteils verbunden ist. Der Federarm ist durch einen Seitenwandbereich des Riegelungsteils gebildet, der durch einen Schlitz 59 abgetrennt ist. Die Darstellung läßt erkennen, daß das Verschlußteil 13 mit einem umlaufenden Wulst 61 versehen sein kann, der für einen Abschluß der Stirnseite des Gehäuses 3 dient und gegebenenfalls die Verschlußplatte 57, die in Figur 9 dargestellt ist, ersetzen kann. Bei einer derartigen Ausgestaltung bildet das Verschlußteil 13 eine Anlagefläche an der Unterseite des Scharnierelements 11 aus und führt dieses besonders gut.

Der Federarm 33 kann an seinem rechten Ende mit einer Anlaufschräge 63 versehen sein, gegen die das Federelement 7 so wirkt, daß die Verriegelungsnase 27 mit einer zusätzlichen, hier nach unten wirkenden Vorspannkraft beaufschlagt wird, die also die Verriegelungsnase 27 in ihre Verriegelungsstellung drängt. Wird durch eine achsiale Bewegung des Scharnierelements 11 -in Figur 9 nach links- das Federelement 7 mit einer erhöhten Vorspannkraft beaufschlagt, bewirkt dies eine Verbesserung der Verankerung der Verriegelungsnase 27 in der zugehörigen Ausnehmung 9 im Gehäuse 3.

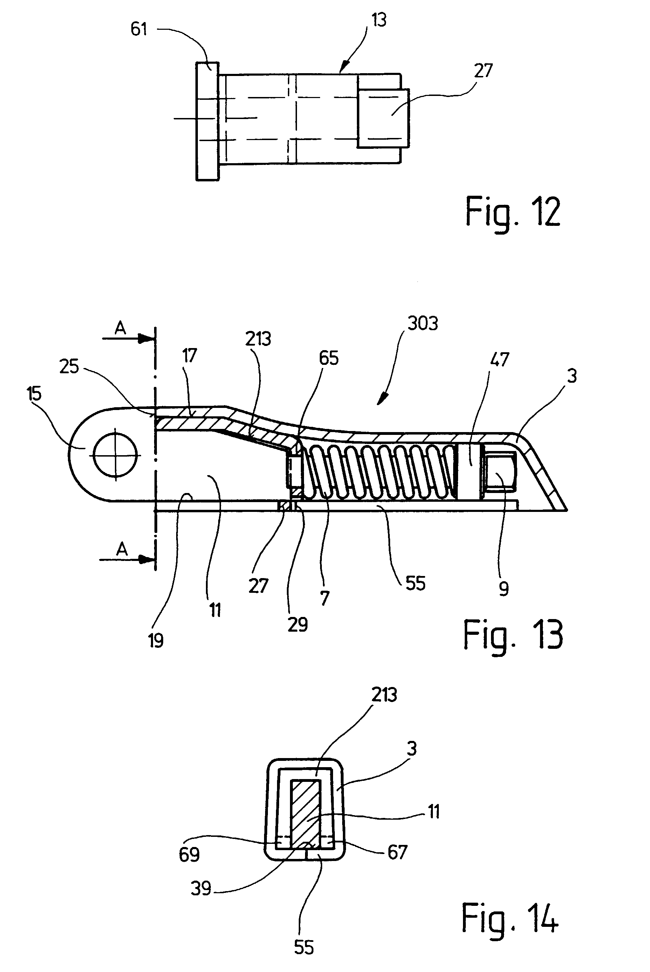

Die Unteransicht in Figur 12 des Verschlußteils 13 zeigt, daß die Breite der Verriegelungsnase 27 geringer sein kann, als die des übrigen Verschlußteils 13. Dagegen überragt der Wulst 61 die seitlichen Begrenzungslinien des Verschlußteils 13, so daß ein Abschluß der Stirnseite des Gehäuses 3 gebildet wird, wobei sich dadurch die Lauffläche 38 vergrößert auf die Querschnittfläche des Gehäuses an dessen Stirnseite.

Bei den zweiten und dritten Ausführungsbeispielen des Federscharniers ist das Gehäuse ebenfalls aus einem verformbaren, vorzugsweise tiefziehfähigen Material hergestellt. Die Verschlußteile und die Scharnierelemente können aus Kunststoff hergestellt sein. Vorzugsweise werden jedoch nickelfreie Metallteile verwendet, wie beispielsweise Titan.

Figur 13 zeigt schließlich ein viertes Ausführungsbeispiel eines Federscharniers 303, das wiederum ein Gehäuse 3 mit einem Boden 55 umfaßt. Im Inneren des Gehäuses befindet sich ein Federelement 7, beispielsweise eine Schraubenfeder, die über einen Fortsatz 9 eines Scharnierelements 11 hinweggeschoben ist und durch einen Anlagering 47 und eine endständige Verbreiterung des Fortsatzes gehalten wird. Der Anlagering 47 bildet eine erste Anlagefläche, ein Verschlußteil 213 eine zweite Anlagefläche.

Das Verschlußteil 13 umfaßt außer dem Fortsatz 9 ein Scharnierauge 15, das aus dem Gehäuse 3 herausragt und dessen Abmessungen so gewählt sind, daß eine Anschlagfläche 25 ausgebildet wird, die an der Stirnseite des Gehäuses 3 anliegt. Das Federelement 7 steht unter einer Vorspannung, so daß das Scharnierauge 15 gegen die Stirnseite des Gehäuses 3 gepreßt wird.

Der Boden 55 des Gehäuses 3 weist eine Ausnehmung 29 auf, die hier als Durchbrechung ausgebildet ist. In diese greift eine Verriegelungsnase 27 des Verschlußteils 213, das als gebogenes Blechteil realisiert ist. Es dient als Führung für das in horizontaler Richtung gegen die Kraft des Federelements 7 verschieblichen Scharnierelements 11 und weist eine Durchbrechung 65 auf, deren Seitenwandungen so auf die Kontur des Fortsatzes 9 abgestimmt sind, daß hier eine Führungsfläche für das Scharnierelement 11 gebildet wird.

Das Verschlußteil 213 liegt mit seiner Oberseite flächig an der Innenseite 17 des Gehäuses 3 und andererseits am Boden 55 an, so daß eine optimale Halterung des Verschlußteils 213 gewährleistet ist.

Figur 14 zeigt einen Querschnitt entlang der in Figur 13 eingezeichneten Linie A-A, aus der ersichtlich ist, daß das Verschlußteil 213 mit seiner Außenfläche rundum an der Innenfläche des Gehäuses 3 anliegt, also sicher gehalten wird. Auf der unteren, dem Boden 55 zugewandten Seite des Scharnierelements 11 erstrecken sich zwei Seitenarme 67 und 69 des Verschlußteils 13, deren diesem zugewandten Innenflächen als Führungsflächen für das Scharnierelement 11 dienen. Die Unterseite 39 des Verschlußteils 213 liegt flächig auf dem Boden 55 des Gehäuses 3 an, so daß auch hier eine Führung des Scharnierelements 11 gegeben ist.

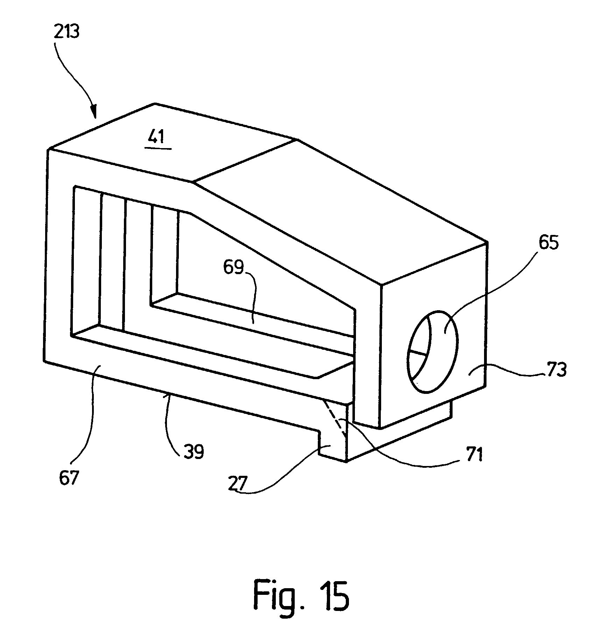

Figur 15 zeigt schließlich eine Prinzipskizze des in Figur 13 und 14 dargestellten Verschlußteils 213. Deutlich sind die Seitenarme 67 und 69 erkennbar, deren einander zugewandten Innenflächen an der Außenseite des Scharnierelements 11 anliegen und Führungsflächen bilden. Diese Darstellung zeigt auch die Durchbrechung 65, durch die der Fortsatz 9 hindurch ragt, und deren Innenfläche Führungsfläche für diesen Fortsatz ist.

Die Seitenarme 67 und 69 dienen als Federarme für die Verriegelungsnase 27, durch die das Verschlußteil 213 nach dem Einschieben in das Gehäuse 3 sicher gehalten wird.

Wie bei den oben dargestellten Ausführungsbeispielen umfaßt das Scharnierelement 11 sowohl das Scharnierauge 15 als auch den Fortsatz 9, auf dem das Federelement 7 angebracht ist. Da das Scharnierelement 11 bei allen Ausführungsbeispielen das jeweilige Verschlußteil durchdringt, bilden das Federelement, das Scharnierelement und das Verschlußteil eine Montageeinheit, die leicht in das Gehäuse 3 einbringbar ist.

Bei den Ausführungsbeispielen, bei denen das Gehäuse 3 mit einem Boden 55 versehen ist, kann die Montageeinheit vor der Anbringung des Gehäuses an einem Brillenbügel endgültig in das Gehäuse 3 eingebracht werden, so daß das Federelement eine vormontierte Baugruppe bildet. Das Gehäuse 3 kann dann auf geeignete Weise an einem Brillenbügel befestigt werden, wobei aufgrund der Federeigenschaften des Federelements 3 Klebeverfahren bevorzugt werden. Bei einer Löt- oder Schweißverbindung zwischen dem Gehäuse und einem Brillenbügel wird die Montageeinheit vorzugsweise nachträglich in das Gehäuse eingebracht. Dadurch läßt sich verhindern, daß das Verschlußteil der Löt- beziehungsweise Schweißhitze ausgesetzt wird, die die Festigkeit der Lauffläche des Verschlußteils negativ beeinflussen würden.

Im Übergangsbereich zwischen den Seitenarmen 67 und 69 und der Verriegelungsnase 27 kann bei dem Ausführungsbeispiel des Verschlußteils 213 in Figur 15 eine, hier gestrichelt dargestellte, Anlaufschräge 71 vorgesehen sein. Wird der dem Federelement 7 zugewandte Arm 73 des Verschlußteils 213 mit einer Federkraft beaufschlagt, so wird dieser gegen die Anlaufschräge 71 gedrängt, so daß die Verriegelungsnase 27 ihrerseits nach unten, also in ihre Verriegelungsstellung gedrückt wird. Verstärkt sich also die Vorspannungskraft des Federelements 7 beim Überdrücken des Brillenbügels, wird die Verriegelungswirkung der Verriegelungsnase 27 mittels der Anlaufschräge 71 verstärkt.

Das anhand der Figuren 13 bis 15 erläuterte Ausführungsbeispiel des Federscharniers 303 zeichnet sich durch ein besonders preiswert herstellbares Verschlußteil 213 aus, das sicher im Inneren des Gehäuses 3 gehalten wird, wobei die Oberseite 41 des Verschlußteils 213 sicher an der Innenseite 17 des Gehäuses 3 anliegt, während die Unterseite 39 der Seitenarme 67 und 69 flächig an der als erste Führungsfläche dienenden Innenseite des Gehäuses 3 (siehe Figur 13) anliegt. Da das Verschlußteil 213 sicher im Gehäuse 3 gehalten wird, kann eine optimale Führung des Scharnierelements 11 gewährleistet werden, auch wenn das Verschlußteil 213 aus einem Blechteil geformt ist und daher sehr preiswert hergestellt werden kann.

Wird die aus dem Federelement, dem Scharnierelement und dem Verschlußteil bestehende Montageeinheit in ein Gehäuse mit Boden eingebracht und ist in dem Boden eine Ausnehmung für eine Verriegelungsnase des Verschlußteils vorgesehen, kann die Montageeinheit nach dem Aufbringen des Gehäuses auf einen Brillenbügel nicht mehr entfernt werden, da die Verriegelungsnasen von außen nicht mehr zugänglich sind. Wird das Federscharnier als vormontierte Baugruppe verwendet und als Ganzes auf einen Brillenbügel aufgebracht, bleibt vor der Montage des Federscharniers die Verriegelungsnase zugänglich, so daß dann auch ein Ausbau der Montageeinheit aus dem Gehäuse noch möglich ist.

In allen Fällen ist gewährleistet, daß bei einem einfachen Aufbau des Federscharniers eine vorgefertigte Montageeinheit in ein auf einem Brillenbügel aufgebrachtes Gehäuse einbringbar ist, wobei das Verschlußteil der Montageeinheit einerseits einen sicheren Halt im Inneren des Gehäuses ergibt und andererseits eine optimale Führung des Scharnierelements gewährleistet. Darüber hinaus bietet das Verschlußteil eine Lauffläche, deren Materialeigenschaften optimal sind und durch Ausglühen beim Löten oder Schweißen nicht beeinträchtigt wurden.

In allen Fällen kann ein einfach herzustellendes Prägeteil als Gehäuse verwendet werden, so daß das Federscharnier kostengünstig herstellbar ist. Da das Verschlußteil zumindest von drei Seiten von dem Gehäuse umschlossen wird, während die vierte Seite von der Oberfläche des Brillenbügels abgeschlossen ist, können Verschmutzungen aber auch Lacke oder Poliermittel nicht in das Innere des Federscharniers gelangen, so daß eine sehr hohe Funktionstüchtigkeit sichergestellt ist. Da die Stirnseite des Gehäuses also durch das Verschlußteil praktisch dicht abgeschlossen ist und da das Gehäuse im übrigen flächig auf dem Bügel aufliegt, wird ein gegen Verschmutzungen gesichertes Federscharnier bereitgestellt, ohne daß es eines besonders großen Konstruktionsaufwandes bedürfte. Auch die Ausgestaltung des Verschlußteils als Führung für das Scharnierelement vereinfacht den Konstruktionsaufwand für das Federelement und senkt die Herstellungskosten.

Wie bereits erwähnt, werden Gehäuse und Scharnierelement mit nur wenigen Verfahrensschritten mittels Stanz- und Umformtechniken kostengünstig aus einem einfachen Metallstreifen gefertigt. Zerspanende Herstellungsschritte sind nicht mehr notwendig.

Auch das in der Beschreibung erwähnte Verschlußteil 13 kann in ähnlicher Weise wie das Gehäuse und das Scharnierelement aus einem Metallstreifen gefertigt werden, wobei vorzugsweise Stanz- und Präge- beziehungsweise Biegetechniken eingesetzt werden. Auch hier werden vorzugsweise nickelfreie Metalle, beispielsweise Titan verwendet.

Die geringere Maßhaltigkeit von Stanz- und Umformtechniken (gegenüber den herkömmlichen zerspanenden Techniken) kann im vorliegenden Fall durch den Einsatz des Verschlußteils wirkungsvoll ausgeglichen werden.

Aus der Beschreibung wird deutlich, daß die Herstellung der genannten Teile sehr einfach und damit äußerst kostengünstig durchführbar ist. Teure Profile, aus denen Gehäuse oder Scharnierelemente ausgeschnitten werden, sind hinfällig. Auch die anschließende zerspanende Bearbeitung dieser ausgeschnittenen Profilteile kann mit dem vorgenannten Herstellungsverfahren entfallen.

Das anhand der Figuren 1 bis 15 erläuterte Federscharnier zeichnet sich darüber hinaus dadurch aus, daß das Scharnierelement, das mit dem Federelement und dem Verschlußteil eine Montageeinheit bildet, als Ganzes leicht in das Gehäuse eingesetzt und sicher verankert werden kann, da das Verschlußteil als Schnappverschluß ausgebildet ist. Mit dem Einführen der Montageeinheit rastet das Verschlußteil verriegelnd in das Gehäuse ein, ohne daß es irgendwelcher weiterer Befestigungsmaßnahmen bedürfte, die die Montage des Federscharniers aufwendiger machen würde.

Trotz der einfachen Montage wird eine sehr exakte Führung des Scharnierelements erreicht, da dieses durch das Verschlußteil allseitig geführt wird. Auch bei dem Ausführungsbeispiel des Verschlußteils, das in Figur 8 dargestellt ist, ist eine allseitige Führung des Scharnierelements dadurch erreicht, daß das Verschlußteil das Scharnierelement U-förmig umgreift und dieses flächig an die Oberfläche des Bügels heranführt, an dem das Federscharnier befestigt ist. Letztlich bewirkt also auch hier das Verschlußteil eine allseitige Führung des Scharnierelements.

Die besondere Ausgestaltung des Verschlußteils bewirkt eine besonders gute Führung: Für die Länge L, die Höhe H und die Breite B dieses Teils gilt die folgende Maßvorgabe: L > H > B. Durch diese Dimensionierung wird einerseits eine sichere Verankerung des Verschlußteils in dem montierten Gehäuse gewährleistet; es stellt sich also ein spielfreier Sitz des Verschlußteils im fertigen Federscharnier ein. Andererseits ergibt gerade diese sichere Verankerung des Verschlußteils im Federscharnier eine sehr gute Führung des Scharnierelements, welches spielfrei im Inneren des Verschlußteils geführt ist.

Obwohl also das Federscharnier ein sehr preisgünstig herstellbares Gehäuse aufweist, in das die Montageeinheit nur eingeklipst zu werden braucht, ergeben sich hervorragende technische Eigenschaften, die ansonsten nur mit einem sehr viel höheren Fertigungsaufwand erreichbar sind.

Die kostengünstige Herstellungsmöglichkeit für das Federscharnier stellt sich auch deshalb ein, weil aufgrund der besonderen Ausgestaltung des Verschlußteils auf spezielle Führungseinrichtungen im Federscharnier verzichtet werden kann, auch entfallen sonst übliche Verriegelungselemente, die das Scharnierelement im Inneren des Gehäuses halten beziehungsweise sichern.

## Patentansprüche

1. Federscharnier zum Aufbringen auf einen Brillenbügel einer Brille, mit
einem länglichen Gehäuse, das zu einer Stirnseite hin geöffnet ist,
einem länglichen, einen Fortsatz und ein Scharnierauge aufweisenden Scharnierelement, das zumindest teilweise im Gehäuse angeordnet ist, und
einem Federelement, das im Inneren des Gehäuses derart angeordnet ist, daß es beim Herausziehen des Scharnierelements komprimiert wird,
**gekennzeichnet durch**
ein Verschlußteil (13), das verriegelbar in das Gehäuse (3) einsetzbar ist und eine als Lauffläche dienende der Öffnung des Gehäuses zugewandte Stirnfläche (38) aufweist, die das Gehäuse stirnseitig abschließt, und
eine mit Führungsflächen (19,21,23) versehene und das Verschlußteil (13) durchdringende Ausnehmung, in der das Scharnierelement in Längsrichtung des Gehäuses (3) und durch die Führungsflächen geführt verlagerbar angeordnet ist.

2. Federscharnier nach Anspruch 1, **dadurch gekennzeichnet**, daß das Gehäuse (3) mit einem Boden (55) versehen ist.

3. Federscharnier nach Anspruch 1 oder 2, **dadurch gekennzeichnet**, daß das Gehäuse im wesentlichen gleiche Wandstärken aufweist.

4. Federscharnier nach Anspruch 1, 2 oder 3, **dadurch gekennzeichnet**, daß der Boden (55) einstückig mit dem Gehäuse (3) ausgebildet ist.

5. Federscharnier nach einem der vorhergehenden Ansprüche, **dadurch gekennzeichnet**, daß das Verschlußteil (13; 113; 213), das Federelement (7) und/oder das Scharnierelement (11) als vormontierbare Montageeinheit ausgebildet sind.

6. Federscharnier nach einem der vorhergehenden Ansprüche, **dadurch gekennzeichnet**, daß das Verschlußteil Führungsflächen für das Scharnierelement (11) aufweist.

7. Federscharnier nach einem der vorhergehenden Ansprüche, **dadurch gekennzeichnet**, daß eine Ausnehmung (29) im Gehäuse (3) für eine am Verschlußteil vorgesehene Verriegelungsnase (27) im Boden (55), in mindestens einer Seitenwand und/oder im Deckel des Gehäuses (3) vorgesehen ist.

8. Federscharnier nach einem der vorhergehenden Ansprüche, **dadurch gekennzeichnet**, daß das Verschlußteil (213) als Biegeteil ausgebildet ist.

9. Federscharnier nach einem der vorhergehenden Ansprüche, **dadurch gekennzeichnet**, daß das Gehäuse, das Scharnierelement, das Federelement und das Verschlußteil eine vormontierbare Baugruppe darstellen.

10. Federscharnier nach einem der vorhergehenden Ansprüche, **dadurch gekennzeichnet**, daß das Verschlußteil als Schnappverschluß ausgebildet ist.

11. Federscharnier nach einem der vorhergehenden Ansprüche, **dadurch gekennzeichnet**, daß die Länge des Verschlußteils größer ist als dessen Höhe und diese größer ist als dessen Breite.

12. Verfahren zur Herstellung eines Federscharniers nach Anspruch 1, mit folgenden Schritten:
Herstellung eines länglichen Gehäuses, das zu einer Stirnseite hin geöffnet ist,
Herstellung eines länglichen, einen Fortsatz und ein Scharnierauge aufweisenden Scharnierelements, das zumindest teilweise im Gehäuse angeordnet wird, und
Einbringen eines Federelements in das Innere des Gehäuses, derart, daß es beim Herausziehen des Scharnierelements komprimiert wird,
**dadurch gekennzeichnet, daß**
ein Verschlußteil hergestellt wird, das verriegelbar in das Gehäuse (3) einsetzbar ist und eine als Lauffläche dienende der Öffnung des Gehäuses zugewandte Stirnfläche (38) aufweist, die das Gehäuse stirnseitig abschließt, und das von einer mit Führungsflächen (19, 21, 23) versehenen Ausnehmung durchdrungen ist, in der das Scharnierelement in Längsrichtung des Gehäuses (3) und durch die Führungsflächen geführt wird, und daß
das Gehäuse (3), das Verschlußteil (13) und/oder das Scharnierelement (11) aus einem Metallmaterial gestanzt und/oder umgeformt werden.

13. Verfahren nach Anspruch 12, **dadurch gekennzeichnet**, daß das Metallmaterial ein bandförmiges nickelfreies Material aus Metall, vorzugsweise Titan ist.

14. Verfahren nach Anspruch 12 oder 13, **dadurch gekennzeichnet**, daß das Scharnierelement (11) in das Verschlußteil (13) eingebracht wird, daß eine Feder auf das Scharnierelement (11) aufgesteckt und befestigt wird, und daß das Verschlußteil und das Scharnierelement gemeinsam in das Gehäuse eingebracht werden, so daß eine Baugruppe aus Gehäuse, Verschlußteil und Scharnierelement entsteht.

15. Verfahren nach Anspruch 14, **dadurch gekennzeichnet**, daß das Gehäuse erst auf einem Bügel befestigt wird, bevor Verschlußteil und Scharnierelement eingebracht werden.

## Claims

1. A spring hinge for mounting on a bow of a pair of spectacles, having
an oblong housing open towards one end face,
an oblong hinge member which has a prolongation and a gudgeon and is at least partially arranged in the housing, and
a spring member arranged in the interior of the housing in such a manner that it is compressed upon removal of the hinge member,
characterised by
a closing part (13) which is insertable into the housing (3) in a lockable manner and has an end surface (38) which serves as a running surface, faces the opening of the housing and closes the end face of the housing, and
an opening which is provided with guide surfaces (19, 21, 23), passes through the closing part (13) and in which the hinge member is arranged so as to be displaceable in the longitudinal direction of the housing (3) and guided by the guide surfaces.

2. A spring hinge in accordance with Claim 1, characterised in that the housing (3) is provided with a base (55).

3. A spring hinge in accordance with Claim 1 or 2, characterised in that the walls of the housing are substantially the same thickness.

4. A spring hinge in accordance with Claim 1, 2 or 3, characterised in that the base (55) is in one piece with the housing (3).

5. A spring hinge in accordance with any one of the preceding Claims, characterised in that the closing part (13; 113; 213), the spring member (7) and/or the hinge member (11) are in the form of an assembly which can be pre-assembled.

6. A spring hinge in accordance with any one of the preceding Claims, characterised in that the closing part has guide surfaces for the hinge member (11).

7. A spring hinge in accordance with any one of the preceding Claims, characterised in that an opening (29), in the housing (3), for a locking projection (27) on the closing part is provided in the base (55), in at least one lateral wall and/or in the top of the housing (3).

8. A spring hinge in accordance with any one of the preceding Claims, characterised in that the closing part (213) is a part which is to be bent.

9. A spring hinge in accordance with any one of the preceding Claims, characterised in that the housing, the hinge member, the spring member and the closing part constitute an assembly which can be pre-assembled.

10. A spring hinge in accordance with any one of the preceding Claims, characterised in that the closing part is a snap-fit closure.

11. A spring hinge in accordance with any one of the preceding Claims, characterised in that the closing part is longer than it is higher and is higher than it is wide.

12. A method of manufacturing a spring hinge in accordance with Claim 1, having the following stages:
manufacture of an oblong housing open towards one end face,
manufacture of an oblong hinge member which has a prolongation and a gudgeon and is at least partially arranged in the housing, and
introduction of a spring member into the interior of the housing in such a manner that it is compressed upon removal of the hinge member,
characterised in that
a closing part is manufactured which is insertable into the housing (3) in a lockable manner and has an end surface (38) - which serves as a running surface, faces the opening of the housing and closes the end face of the housing - and which has passing through it an opening provided with guide surfaces (19, 21, 23), the hinge member being guided in this opening in the longitudinal direction of the housing (3) and by the guide surfaces, and in that the housing (3), the closing part (13) and/or the hinge member (11) are stamped and/or shaped from a metal material.

13. A method in accordance with Claim 12, characterised in that the metal material is a strip-like, nickel-free material made of metal, preferably titanium.

14. A method in accordance with Claim 12 or 13, characterised in that the hinge member (11) is introduced into the closing part (13), in that a spring is mounted and secured on the hinge member (11), and in that the closing part and the hinge member are together introduced into the housing so that an assembly composed of the housing, the closing part and the hinge member is produced.

15. A method in accordance with Claim 14, characterised in that before the closing part and the hinge member are introduced, the housing is first of all secured on a bow.

## Revendications

1. Charnière à ressort à monter sur une branche de lunettes, comportant :
un boîtier allongé, ouvert en direction d'une face frontale,
un élément formant charnière, allongé, présentant un prolongement et un oeillet de charnière,
élément disposé au moins partiellement dans le boîtier, et
un élément élastique, disposé à l'intérieur du boîtier de manière à être comprimé lors de l'extraction de l'élément formant charnière,
caractérisée par
une partie obturateur (13), insérable de façon verrouillable dans le boîtier (3) et présentant une face frontale (38) servant de surface de franchissement tournée vers l'ouverture du boîtier et fermant frontalement le boîtier, et
un évidement, pourvu de surfaces de guidage (19, 21, 23) et traversant la partie obturateur (13), évidement dans lequel l'élément charnière est disposé de façon déplaçable en direction longitudinale du boîtier (3) et guidé par les surfaces de guidage.

2. Charnière à ressort selon la revendication 1, caractérisée en ce que le boîtier (3) est pourvu d'un fond (55).

3. Charnière à ressort selon la revendication 1 ou 2, caractérisée en ce que le boîtier a des épaisseurs de paroi sensiblement égales.

4. Charnière à ressort selon la revendication 1, 2 ou 3, caractérisée en ce que le fond (55) est réalisé d'une seule pièce avec le boîtier (3).

5. Charnière à ressort selon l'une des revendications précédentes, caractérisée en ce que la partie obturateur (13; 113; 213), l'élément élastique (7) et/ou l'élément formant charnière (11) sont réalisés sous forme d'ensemble de montage prémontable.

6. Charnière à ressort selon l'une des revendications précédentes, caractérisée en ce que la partie obturateur présente des surfaces de guidage destinées à l'élément formant charnière (11).

7. Charnière à ressort selon l'une des revendications précédentes, caractérisée en ce qu'est prévu, dans le boîtier (3), un évidement (29) pour un ergot de verrouillage (27) prévu sur la partie obturateur, dans le fond (55), en au moins une paroi latérale et/ou dans le couvercle du boîtier (3).

8. Charnière à ressort selon l'une des revendications précédentes, caractérisée en ce que la partie obturateur (213) est réalisée sous la forme de partie coudée.

9. Charnière à ressort selon l'une des revendications précédentes, caractérisée en ce que le boîtier, l'élément formant charnière, l'élément élastique et la partie obturateur constituent un groupe de construction prémontable.

10. Charnière à ressort selon l'une des revendications précédentes, caractérisée en ce que la partie obturateur est réalisée sous la forme de fermeture à déclic.

11. Charnière à ressort selon l'une des revendications précédentes, caractérisée en ce que la longueur de la partie obturateur est supérieure à sa hauteur et celle-ci est supérieure à sa largeur.

12. Procédé de fabrication d'une charnière à ressort selon la revendication 1, présentant les étapes ci-après :
fabrication d'un boîtier allongé, ouvert en direction d'une face frontale,
fabrication d'un élément formant charnière, allongé, présentant un prolongement et un oeillet de charnière, disposé au moins partiellement dans le boîtier, et
introduction d'un élément élastique à l'intérieur du boîtier, de manière à ce qu'il soit comprimé lors de l'extraction de l'élément formant charnière,
caractérisé en ce qu'est fabriquée
une partie obturateur, insérable de façon verrouillable dans le boîtier (3) et présentant une face frontale (38) servant de surface de franchissement, tournée vers l'ouverture du boîtier, surface frontale qui ferme frontalement le boîtier et qui est traversée par un évidement, pourvu de surfaces de guidage (19, 21, 23), évidement dans lequel l'élément formant charnière est guidé en direction longitudinale du boîtier (3) et au moyen des surfaces de guidage, et en ce que
le boîtier (3), la partie obturateur (13) et/ou l'élément formant charnière (11) sont réalisés par estampage et/ou par façonnage à partir d'un élément métallique.

13. Procédé selon la revendication 12, caractérisé en ce que le matériau métallique est un matériau sans nickel, se présentant sous forme de ruban, en métal, de préférence en titane.

14. Procédé selon la revendication 12 ou 13, caractérisé en ce que l'élément formant charnière (11) est introduit dans la partie obturateur (13), en ce qu'un ressort est enfilé et fixé sur l'élément formant charnière (11), et en ce que la partie obturateur et l'élément formant charnière sont introduits conjointement dans le boîtier, si bien qu'est constitué un groupe de construction, formé du boîtier, de la partie obturateur et de l'élément formant charnière.

15. Procédé selon la revendication 14, caractérisé en ce que le boîtier est ensuite fixé sur une branche, avant que la partie obturateur et l'élément formant charnière soient introduits.
